Europäisches Patentamt

European Patent Office

Office européen des brevets

(11) Numéro de publication: **0 241 371**
**A1**

## (12) DEMANDE DE BREVET EUROPEEN

(21) Numéro de dépôt: **87400772.7**

(22) Date de dépôt: **07.04.87**

(51) Int. Cl.⁴: **G 11 B 5/255**
**// G11B5/31**

(30) Priorité: **11.04.86 FR 8605238**

(43) Date de publication de la demande:
**14.10.87 Bulletin 87/42**

(84) Etats contractants désignés: **DE GB IT NL**

(71) Demandeur: **THOMSON-CSF**
**173, Boulevard Haussmann**
**F-75379 Paris Cédex 08 (FR)**

(72) Inventeur: **Meunier, Paul-Louis**
**THOMSON-CSF SCPI 19, avenue de Messine**
**F-75008 Paris (FR)**

**Razeghi, Manijeh**
**THOMSON-CSF SCPI 19, avenue de Messine**
**F-75008 Paris (FR)**

**Rolland, Jean-Luc**
**THOMSON-CSF SCPI 19, avenue de Messine**
**F-75008 Paris (FR)**

(74) Mandataire: **Lepercque, Jean et al**
**THOMSON-CSF SCPI 19, avenue de Messine**
**F-75008 Paris (FR)**

(54) Procédé de réalisation d'une couche de protection mécanique pour tête magnétique d'enregistrement/lecture et tête magnétiqe d'enregistrement/lecture mettant en oeuvre ce procédé.

(57) On prévoit, en fin de fabrication de la tête, une étape de réalisation d'une couche de protection (2) mécanique en matériau tel que le coefficient de collage est élevé, c'est-à-dire les liaisons chimiques avec le matériau constituant la tête est proche de l'unité.

Le procédé est applicable notamment à la réalisation à des têtes magnétiques en couches minces pour enregistrement/lecture sur bandes magnétiques.

FIG_3

EP 0 241 371 A1

**Description**

PROCEDE DE REALISATION D'UNE COUCHE DE PROTECTION MECANIQUE POUR TETE MAGNETIQUE D'ENREGISTREMENT/LECTURE ET TETE MAGNETIQUE D'ENREGISTREMENT/LECTURE METTANT EN OEUVRE CE PROCEDE

L'invention concerne un procédé de réalisation d'une couche de protection mécanique pour tête magnétique d'enregistrement/lecture et une tête magnétique d'enregistrement/lecture mettant en oeuvre ce procédé applicable notamment dans la technique des têtes magnétiques intégrées.

Les têtes magnétiques intégrées sont produites actuellement comme éléments de lecture ou d'écriture pour disques durs. Dans ce cadre d'utilisation, les têtes magnétiques flottent au-dessus de la surface du disque. Leur hauteur de vol est de quelques microns et durant leur utilisation ne frottent jamais le disque sauf lors du démarrage ou de l'arrêt du disque.

Par contre, dans les appareils du type magnétoscopes, le support d'enregistrement est une bande magnétique soit en oxyde, soit en métal et les têtes sont en contact avec la bande. Il en résulte une usure qui selon les normes actuelles pour les têtes VHS est de 20 micromètres pour 2000 heures de fonctionnement, fixant ainsi la durée de vie du magnétoscope.

Pour les têtes en couches minces, le problème de l'interface bande-tête d'enregistrement/lecture est plus crucial puisqu'il s'agit de dimensions de l'ordre de quelques micromètres pour les parties actives magnétiques. En effet, les dépôts de couches minces ont des épaisseurs de l'ordre de 5 micromètres et l'entrefer est de 0,2 micromètre, le substrat sur lequel les couches sont disposées étant de l'ordre de 500 micromètres d'épaisseur.

Dans ces conditions, on a intérêt à protéger les parties actives des têtes magnétiques contre une usure prématurée.

C'est pourquoi l'invention fournit un procédé permettant de réaliser une couche de protection sur les surfaces actives des têtes magnétiques, la couche obtenue étant suffisamment mince et d'épaisseur uniforme pour ne pas nuire à la qualité de la tête. L'invention concerne également une tête magnétique obtenue par ce procédé. Elle offre l'avantage de présenter des caractéristiques quasiment stables pendant toute la durée de vie de la tête.

L'invention concerne donc un procédé de réalisation d'une couche de protection mécanique pour tête magnétique d'enregistrement/lecture comprenant une surface active, caractérisé en ce qu'il comporte après réalisation de la tête magnétique d'enregistrement/lecture, au moins une étape de réalisation d'un dépôt sur la surface active d'un matériau composé d'un ou plusieurs éléments chimiques dont le coefficient de collage avec le ou les matériaux constituant la surface active est élevé.

L'invention concerne également une tête magnétique d'enregistrement/lecture mettant en oeuvre le procédé, comportant sur sa surface extérieure, au moins une couche mince d'un matériau de protection mécanique dont le coefficient de collage avec le matériau constituant la tête est élevé.

Les différents objets et caractéristiques de l'invention apparaîtront plus clairement dans la description qui va suivre, faite en se reportant aux figures annexées qui représentent :
- la figure 1, une vue générale d'une portion de tête magnétique d'enregistrement/lecture selon l'art connu ;
- la figure 2, un exemple de réalisation simplifiée d'une tête magnétique intégrée selon l'art connu ;
- la figure 3, un exemple de réalisation simplifiée d'une tête magnétique intégrée selon l'invention ;
- la figure 4, un exemple de réalisation d'une variante de la figure 3.

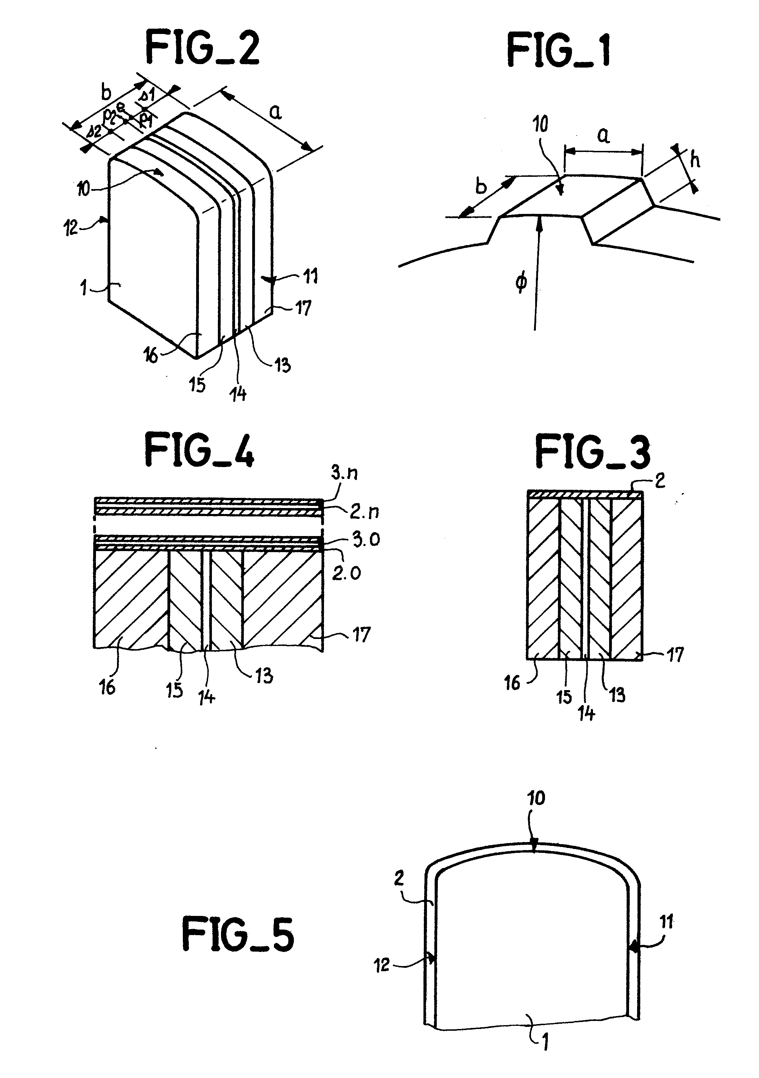

Une tête d'enregistrement selon l'art connu telle que représentée en figure 1 a un diamètre $\varnothing$ d'environ 10 mm et possède des portions actives d'enregistrement/lecture dont l'épaisseur h est d'environ 20 micromètres. Chaque portion active a une surface active dont les dimensions sont pour la longueur a d'environ 500 micromètres et la largeur b, 1000 micromètres.

Lorsque la portion active est réalisée en couches minces, elle a une configuration telle que représentée en figure 2. Elle comporte alors deux couches de matériau magnétique 13 et 15 séparées par une couche 14 en matériau non magnétique.

Les couches 13 et 15 sont encadrées par des couches de substrat 16, 17, en matériau telle que de la ferrite pressée à chaud ou monocristalline.

Les couches de matériaux magnétiques 13 et 15 constituent donc les pièces polaires de la tête magnétique et la couche 14 constitue l'entrefer situé entre ces pièces polaires.

Pour éviter l'usure de la tête, l'invention prévoit de la recouvrir d'une ou plusieurs couches de protection 2 suffisamment minces pour ne pas nuire aux qualités de la tête.

Selon un premier exemple de réalisation du procédé de l'invention, on prévoit après finition de la tête magnétique (1) de réaliser sur la surface active (10) de la tête magnétique, une couche 2 d'un matériau dont le coefficient de collage avec la surface active 10 est élevé c'est-à-dire que la liaison chimique entre le matériau de la couche 2 et les matériaux de la surface active 10 se rapproche de 1, et présentant une bonne résistance à l'usure ainsi qu'un bon pouvoir de lubrification.

Par exemple, le matériau magnétique 13 et 15 étant un alliage de fer, d'aluminium et de silicium, et l'entrefer 14 étant un oxyde d'aluminium $Al_2O_3$, le matériau de la couche 2 pourra être un alliage d'éléments chimiques du groupe IV de la classification périodique des éléments tel qu'un carbure de silicium $S_iC$. Mais on pourra choisir d'autres éléments et notamment choisir plus de deux éléments.

Dans le cas d'utilisation de deux éléments, l'alliage de la couche 2 sera un monocristal ou un polycristal suivant les conditions de croissance dans le cas de plusieurs éléments. La structure cristalline obtenue sera orientée et les composés seront bien liés de façon à obtenir une cohésion dans le sens de l'arrachement et conserver une légère élasticité dans le sens de l'épaisseur.

Selon l'invention, la couche protection peut être réalisée par l'un des procédé suivants :

- une croissance épitaxiale en phase vapeur désignée également en terminologie anglo-saxonne par "Chemical Vapor Deposition" (CVD) ;

- une croissance épitaxiale en phase vapeur d'organométallique désignée en terminologie anglo-saxonne par "Metalorganic Chemical Vapor Deposition" (MOCVD) ;

- une épitaxie à jets moléculaires ou MBE (Molecular Beam Epitaxig) en terminologie anglo-saxonne" ;

- une pulvérisation cathodique ou sputtering en terminologie anglo-saxonne ;

- une vaporisation.

Dans tous ces cas, le procédé utilisé permet d'obtenir une couche 2 d'épaisseur uniforme dont on peut ajuster l'épaisseur avec précision, et parfaitement reproductible.

Si on réalise l'épitaxie d'une seule couche d'un alliage, on prévoiera alors une couche dont l'épaisseur correspondra à la durée de vie estimée de la tête, par exemple d'une centaine à un millier d'Angströms.

Par contre, selon une variante de l'invention, on prévoit également l'épitaxie de couches alternées de plusieurs matériaux tels que ceux mentionnés précédemment. Par exemple, comme cela est représenté en figure 4, en utilisant du silicium et du carbone, on fera croître successivement des couches alternées de silicium 2.0 à 2.n et de Carbone 3.0 à 3.n. Ces couches seront d'une épaisseur très réduite de telle façon que l'ensemble des couches ainsi obtenu apparaissent comme étant un alliage d'éléments des différentes couches.

L'épaisseur de chaque couche sera comprise entre quelques Angströms et quelques dizaines d'Angströms, par exemple 4 à 5 Angströms.

Le nombre de couches sera alors fonction de la durée de vie estimée de la tête. Par exemple, il sera compris entre 25 et 150.

La réalisation de ces différentes couches peut être considérée comme une succession de croissances de différentes couches. En réalité, elles seront réalisées au cours d'une même étape de croissance épitaxiale durant laquelle on changera périodiquement le ou les produits épitaxiés.

Dans l'exemple de réalisation de la figure 4, on a prévu deux types de couches 2.0 à 2.n et 3.0 à 3.n, mais il est également possible de prévoir un plus grand nombre de types de couches en prévoyant l'épitaxie d'un plus grand nombre de produits.

Selon l'invention, on prévoit également d'injecter d'autres produits, tels que par exemple de l'oxygène ou de l'azote, durant tout ou partie de l'étape d'épitaxie et cela que ce soit durant l'exemple du procédé de l'invention réalisant l'épitaxie d'un alliage, ou durant la variante de réalisation prévoyant l'épitaxie de couches alternées de différents matériaux.

Dans ce qui précède, on a prévu de recouvrir la surface active 10 de la tête 1, mais on prévoit également de recouvrir entièrement la tête et notamment les flancs 11 et 12 sur lesquels la bande peut frotter.

Le procédé selon l'invention prévoit également de réaliser plusieurs têtes sur un même substrat ou de les assembler puis de réaliser une couche de protection 2 sur l'ensemble de têtes. On obtient ainsi une tête multipistes.

On prévoit également, après la réalisation d'une couche de protection 2 sur un ensemble de têtes, de séparer ensuite les différentes têtes les unes des autres.

Le procédé de l'invention permet ainsi d'obtenir une tête magnétique d'enregistrement/lecture recouverte d'une couche mince de protection 2 dont le coefficient de collage avec le matériau de la tête est élevé.

Le matériau de la couche de protection présente une cohésion dans le plan de l'arrachement et concerne une légère élasticité dans le sens de l'épaisseur. Ainsi, il n'est pas forcément dur pour résister à l'usure, mais est lubrifiant.

De plus, le procédé de l'invention est reproductible, ce qui permet d'obtenir différentes têtes recouvertes de couches de protections de même épaisseur et de mêmes qualités fournissant ainsi des têtes de même durée de vie.

Enfin, pour assurer de façon certaine le caractère lubrifiant de la couche de protection, l'invention prévoit également une étape supplémentaire de dépôt d'un matériau lubrifiant tel qu'un polyimide de siloxane. Une telle couche pourra avoir une épaisseur de 300 Angströms.

Comme représenté en figure 3, la couche de protection 2 est unique et réalisée avec un alliage de deux composants ou plus. Cet alliage sera un monocristal ou un polycristal. Les composants pourront être, par exemple, du groupe IV de la classification périodique des éléments, tels que du silicium et du carbone. On peut également utiliser un (ou plusieurs) élément du groupe IV et injecter un autre produit tel que de l'oxygène ou de l'azote. Comme mentionné précédemment, l'épaisseur de la couche est fonction de la durée de vie estimée de la tête, par exemple 100 à 1000 Angströms.

Comme représenté en figure 4, la couche 2 peut comporter un empilement de sous-couches 2.0 à 3.n. Ces différentes sous-couches sont réalisées avec des matériaux de types différents. Selon l'exemple de la figure 4, on a prévu deux types de matériaux et on a alterné les couches 2.0 à 2.n et 3.0 à 3.n des deux types de matériaux.

Chaque sous-couche est très mince. A titre d'exemple, son épaisseur est comprise entre quelques Angströms et quelques dizaines d'Angströms. Le nombre de couches est calculé en fonction du taux d'usure au frottement des matériaux utilisés et de la durée vie estimée de la tête.

Par exemple, ce nombre de couches peut être compris entre 25 et 150.

Les matériaux utilisés sont les mêmes que ceux mentionnés précédemment. Par exemple, ce pourra être du silicium et du carbone. Il pourra y avoir par surcroît en mélange dans chacun de ces matériaux d'autres composants (Azote oxygène par exemple).

Enfin, selon l'invention, la tête magnétique pourra avoir non seulement sa surface active 10 recouverte d'une couche protectrice, mais aussi avoir ses flancs 11 et 12 recouverts, comme cela est représenté en figure 5, voire être entièrement recouverte.

Comme cela a été mentionné précédemment dans la description du procédé de l'invention, la couche 2 est en matériau monocristallin ou polycristallin dont la structure cristalline est orientée de façon à présenter une cohésion dans le plan de l'arrachement. Le matériau de la couche 2 présente de plus une légère élasticité dans le sens de l'épaisseur, il n'est pas forcément dur mais présente un pouvoir de lubrification.

Enfin, bien que cela ne soit pas représenté sur les figures, la couche de protection 2 peut être recouverte d'une couche d'un matériau lubrifiant tel qu'un polyimide de siloxane d'épaisseur, par exemple, 300 angströms.

Les différents modes de réalisation de l'invention qui précèdent n'ont été donnés qu'à titre d'exemple. Les valeurs numériques notamment et les types de matériaux n'ont été donnés que pour clarifier la description, mais d'autres valeurs et types de matériaux peuvent être utilisés sans sortir du cadre de l'invention.

## Revendications

1. Procédé de réalisation d'une couche de protection mécanique pour tête magnétique d'enregistrement/lecture (1) comprenant une surface active (10), caractérisé en ce qu'il comporte après réalisation de la tête magnétique d'enregistrement/lecture (1), au moins une étape de réalisation d'un dépôt sur la surface active (10) d'un matériau (2) composé d'un ou plusieurs éléments chimiques dont le coefficient de collage avec le ou les matériaux (3, 4) constituant la surface active (10) est élevé.

2. Procédé de réalisation selon la revendication 1, dans lequel la tête magnétique d'enregistrement/lecture (1) comporte des flancs (11, 12) de part et d'autre de la surface active, caractérisé en ce que l'étape de croissance épitaxiale est réalisée également sur les flancs (11, 12).

3. Procédé de réalisation selon la revendication 2, caractérisé en ce que la réalisation dudit dépôt est réalisée par un procédé de croissance épitaxiale à jet moléculaire.

4. Procédé de réalisation selon la revendication 2, caractérisé en ce que la réalisation dudit dépôt est réalisée par un procédé de croissance épitaxiale en phase vapeur.

5. Procédé de réalisation selon la revendication 2, caractérisé en ce que la réalisation dudit dépôt est réalisée par un procédé de croissance épitaxiale en phase vapeur d'organométalliques.

6. Procédé de réalisation selon la revendication 2, caractérisé en ce que la réalisation dudit dépôt est réalisée par pulvérisation cathodique.

7. Procédé de réalisation selon la revendication 2, caractérisé en ce que la réalisation dudit dépôt est réalisée par évaporation.

8. Procédé de réalisation selon la revendication 2, caractérisé en ce qu'il comporte une succession de croissances épitaxiales de matériaux différents.

9. Procédé de réalisation selon la revendication 8, caractérisé en ce qu'il comporte une croissance de plusieurs couches alternées de matériaux de plusieurs types différents.

10. Procédé de réalisation selon la revendication 1, caractérisé en ce qu'il comporte une croissance de plusieurs couches alternées de matériaux de deux types différents.

11. Procédé de réalisation selon la revendication 10, caractérisé en ce que chaque couche a une épaisseur comprise entre quelques Angstroëms et quelques dizaines d'Angströms.

12. Procédé de réalisation selon la revendication 11, caractérisé en ce qu'il comporte la croissance d'un nombre de couches compris entre 25 et 150.

13. Procédé de réalisation selon la revendication 2, caractérisé en ce que la croissance épitaxiale prévoit la croissance de plusieurs produits simultanément.

14. Procédé de réalisation selon la revendication 13, caractérisé en ce que la croissance épitaxiale se fait avec deux produits simultanément.

15. Procédé de réalisation selon la revendication 13, caractérisé en ce que l'épaisseur de la couche épitaxiale est comprise entre une centaine et un millier d'Angströms.

16. Procédé de réalisation selon l'une des revendications 8 ou 12, caractérisé en ce que les matériaux utilisés comportent des éléments du groupe IV de la classification périodique des éléments.

17. Procédé de réalisation selon la revendication 16, caractérisé en ce que les matériaux utilisés comportent du silicium et du carbone.

18. Procédé de réalisation selon l'une des revendications 8 ou 12, caractérisé en ce que la croissance épitaxiale se fait avec du silicium en présence d'oxygène.

19. Procédé de réalisation selon l'une des revendications 8 ou 12, caractérisé en ce que la croissance épitaxiale se fait avec du silicium en présense d'azote.

20. Procédé de réalisation selon la revendication 2, caractérisé en ce que l'étape de croissance épitaxiale est précédée par une étape d'assemblage de plusieurs têtes magnétiques d'enregistrement/lecture et que l'étape de croissance épitaxiale est réalisée sur l'ensemble de têtes ainsi assemblées de façon à obtenir une tête multipistes.

21. Procédé de réalisation selon la revendication 19, caractérisé en ce que l'étape de croissance épitaxiale est suivie d'une étape de séparation des différentes têtes les unes des autres.

22. Procédé de réalisation selon l'une quelconque des revendications précédentes, caractérisé en ce qu'il comporte, après l'étape de réalisation d'un dépôt sur la surface active (10), une étape de réalisation d'une couche d'un matériau lubrifiant.

23. Procédé de réalisation selon la revendication 22, caractérisé en ce que le matériau lubrifiant est un polyimide siloxane.

24. Tête magnétique d'enregistrement/lecture mettant en oeuvre le procédé selon l'une quelconque des revendications précédentes, caractérisée en ce qu'elle comporte sur sa surface extérieure, au moins une couche mince (2) d'un matériau de protection mécanique dont le coefficient de collage avec le matériau constituant la tête est élevé.

25. Tête magnétique d'enregistrement/lecture selon la revendication 24, caractérisée en ce qu'elle comporte plusieurs couches alternées de matériaux de natures différentes.

26. Tête magnétique d'enregistrement/lecture selon la revendication 25, caractérisée en ce que l'épaisseur de chaque couche est comprise entre quelques Angströems et quelques dizaines d'Angströems.

27. Tête magnétique d'enregistrement/lecture selon la revendication 26, caractérisée en ce que le nombre de couches est compris entre 25 et 150.

28. Tête magnétique d'enregistrement/lecture selon l'une quelconque des revendications 24 à 27, caractérisée en ce que l'épaisseur totale de la couche de protection est comprise entre une centaine et un millier d'Angströms.

29. Tête magnétique d'enregistrement/lecture selon l'une quelconque des revendications 24 à 28, caractérisée en ce que les matériaux utilisés comportent un ou plusieurs éléments du groupe IV de la classification périodique des éléments.

30. Tête magnétique d'enregistrement/lecture selon la revendication 29, caractérisée en ce que les matériaux utilisés comportent du silicium et du carbone.

31. Tête magnétique d'enregistrement/lecture selon la revendication 30, caractérisée en ce qu'elle comporte des couches alternées de silicium et de carbone.

32. Tête magnétique selon l'une quelconque des revendications 20 à 28, caractérisée en ce que un ou plusieurs des matériaux constituant la ou les différentes couches sont des oxydes.

33. Tête magnétique selon l'une quelconque des revendications 24 à 28, caractérisée en ce que un ou plusieurs des matériaux constituant la ou les différentes couches sont des alliages comportant de l'azote.

34. Tête magnétique selon la revendication 25, caractérisée en ce que la ou les couches de protection recouvrent la surface active (10) de la tête.

35. Tête magnétique selon la revendication 25, caractérisée en ce que la ou les couches de protection recouvrent les flancs de la tête.

36. Tête magnétique selon l'une quelconque des revendications 24 à 35, caractérisée en ce qu'elle comporte sur la couche de protection une couche d'un matériau lubrifiant.

37. Tête magnétique selon l'une quelconque des revendications 24 à 36, caractérisé en ce qu'elle comporte, empilées, deux couches de substrat (16,17) qui encadrent deux couches de matériau magnétique (13, 15) tenant lieu de pièces polaires, lesquelles encadrent une couche (14) de matériau non magnétique tenant lieu d'entrefer, la surface active de la tête étant constituée par au moins une tranche de cet empilement de couches.

0241371

FIG_2

FIG_1

FIG_4

FIG_3

FIG_5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PATENT ABSTRACTS OF JAPAN, vol. 5, no. 150 (P-81)[[822], 22 septembre 1981; & JP-A-56 83 829 (MITSUBISHI DENKI K.K.) 08-07-1981 * Résumé * | 1,16, 17,24, 29,30, 37 | G 11 B    5/255// G 11 B    5/31 |
| A | Idem | 2,34, 35 | |
| X | PATENT ABSTRACTS OF JAPAN, vol. 1, no. 19 (E-77), 2 février 1978, page 11178 E 77; & JP-A-52 137 313 (SUWA SEIKOSHA K.K.) 16-11-1977 * Résumé * | 1,7,16 ,17,24 ,29,30 | |
| A | Idem | 34 | DOMAINES TECHNIQUES RECHERCHES (Int. Cl.4) |
| X | EP-A-0 123 826   (SIEMENS AG)   * Page 3, paragraphes 3,4; page 4, début de l'avant-dernier paragraphe - page 5, fin de l'avant-dernier paragraphe * | 1,6,16 ,24,28 ,29 | G 11 B |
| A | | 20,34 | |

--- -/-

Le présent rapport de recherche a été établi pour toutes les revendications

| Lieu de la recherche | Date d'achèvement de la recherche | Examinateur |
|---|---|---|
| LA HAYE | 16-07-1987 | FUX J. |

## DOCUMENTS CONSIDERES COMME PERTINENTS

Page  2

| Catégorie | Citation du document avec indication, en cas de besoin, des parties pertinentes | Revendication concernée | CLASSEMENT DE LA DEMANDE (Int. Cl.4) |
|---|---|---|---|
| X | IBM TECHNICAL DISCLOSURE BULLETIN, vol. 14, no. 6, novembre 1971, page 1756, Armonk, New York, US; V. SADAGOPAN et al.: "Wear resistant GaFeO3 coatings" * En entier * | 1,6,24 ,32 | |
| | --- | | |
| X | PATENT ABSTRACTS OF JAPAN, vol. 7, no. 270 (P-240)[1415], 2 décembre 1983; & JP-A-58 150 122 (NIPPON DENKI K.K.) 06-09-1983 * Résumé * | 1,6,16 ,24,28 ,29,37 | |
| A | Idem | 22,34-36 | |
| | --- | | |
| X | PATENT ABSTRACTS OF JAPAN, vol. 10, no. 48 (P-431)[2105], 25 février 1986; & JP-A-60 193 112 (SEIKO DENSHI KOGYO K.K.) 01-10-1985 * Résumé * | 1,6,16 ,24,29 | DOMAINES TECHNIQUES RECHERCHES (Int. Cl.4) |
| A | Idem | 34 | |
| | ---          -/- | | |

Le présent rapport de recherche a été établi pour toutes les revendications

| Lieu de la recherche LA HAYE | Date d'achèvement de la recherche 16-07-1987 | Examinateur FUX J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

## DOCUMENTS CONSIDERES COMME PERTINENTS

Page    3

| Catégorie | Citation du document avec indication, en cas de besoin, des parties pertinentes | Revendication concernée | CLASSEMENT DE LA DEMANDE (Int. Cl.4) |
|---|---|---|---|
| X | IBM TECHNICAL DISCLOSURE BULLETIN, vol. 19, no. 1, juin 1976, page 351, Armonk, New York, US; F. d'HEURLE et al.: "Silicon nitride protection for magnetic heads" * En entier * | 1,4,6, 16,24, 28,29, 33 | |
| A | Idem | 15,19, 34,37 | |
| | --- | | |
| X | PATENT ABSTRACTS OF JAPAN, vol. 6, no. 183 (P-143)[1061], 18 septembre 1982; & JP-A-57 98 121 (HITACHI KINZOKU K.K.) 18-06-1982 * Résumé * | 1,6,16 ,24,29 ,32 | |
| A | Idem | 18,34, 35 | DOMAINES TECHNIQUES RECHERCHES (Int. Cl.4) |
| | --- | | |
| A | US-A-4 504 540   (KAMINAKA et al.)    * Colonne  1,  lignes  27-36; colonne  2, ligne 48 - colonne 3, ligne 24; figures 3,4 * | 1,6,8- 10,16, 17,24, 25,29, 30,32, 37 | |
| | ---   -/- | | |

Le présent rapport de recherche a été établi pour toutes les revendications

| Lieu de la recherche LA HAYE | Date d'achèvement de la recherche 16-07-1987 | Examinateur FUX J. |
|---|---|---|

## DOCUMENTS CONSIDERES COMME PERTINENTS

Page 4

| Catégorie | Citation du document avec indication, en cas de besoin, des parties pertinentes | Revendication concernée | CLASSEMENT DE LA DEMANDE (Int. Cl.4) |
|---|---|---|---|
| A | IBM TECHNICAL DISCLOSURE BULLETIN, vol. 26, no. 9, février 1984, pages 4437-4438, Armonk, New York, US; G, ELSNER et al.: "Silicon magnetic head slider with sapphire rails" * Page 437, paragraphe 1 et début du dernier paragraphe - page 4438, fin du dernier paragraphe * | 1,3,15 ,24,28 ,32 | |
| | --- | | |
| A | PATENT ABSTRACTS OF JAPAN, vol. 10, no. 30 (P-426)[2087], 5 février 1986; & JP-A-60 179 905 (TOKYO DENKI K.K.) 13-09-1985 * Résumé * | 1,6,16 ,17,22 ,24,29 ,30,36 ,37 | |
| | --- | | |
| A | PATENT ABSTRACTS OF JAPAN, vol. 9, no. 37 (P-335)[1760], 16 février 1985; & JP-A-59 177 721 (MATSUSHITA DENKI SANGYO K.K.) 08-10-1984 * Résumé * | 1,2,22 -24,36 ,37 | DOMAINES TECHNIQUES RECHERCHES (Int. Cl.4) |
| | --- | | |
| A | EP-A-0 123 707 (IBM CORP.) * Page 7, ligne 28 - page 8, ligne 11; page 11, lignes 30-31; page 18, lignes 16-22; figure 1 * | 1,16, 17,22- 24,29, 30,32, 34-37 | |
| | ----- | | |

Le présent rapport de recherche a été établi pour toutes les revendications

| Lieu de la recherche LA HAYE | Date d'achèvement de la recherche 16-07-1987 | Examinateur FUX J. |
|---|---|---|